(19) Europäisches Patentamt
European Patent Office
Office européen des brevets

(11) **EP 3 460 378 B1**

(12) **EUROPÄISCHE PATENTSCHRIFT**

(45) Veröffentlichungstag und Bekanntmachung des Hinweises auf die Patenterteilung:
**29.04.2020  Patentblatt 2020/18**

(51) Int Cl.:
**F41G 3/06** *(2006.01)*        **F41G 1/473** *(2006.01)*

(21) Anmeldenummer: **18195981.8**

(22) Anmeldetag: **21.09.2018**

(54) **VORRICHTUNG ZUR ERMITTLUNG EINER ERSATZDISTANZ ZWISCHEN EINEM STANDORT UND EINEM ERSATZAUFTREFFPUNKT EINES GESCHOSSES**

DEVICE FOR DETERMINING A REPLACEMENT DISTANCE BETWEEN A LOCATION AND AN INITIAL IMPACT POINT OF A PROJECTILE

DISPOSITIF DE DÉTERMINATION D'UNE DISTANCE DE REMPLACEMENT ENTRE UN EMPLACEMENT ET UN POINT D'IMPACT DE REMPLACEMENT D'UN ÉTAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2017   AT 508052017**

(43) Veröffentlichungstag der Anmeldung:
**27.03.2019   Patentblatt 2019/13**

(73) Patentinhaber: **Swarovski-Optik KG.
6067 Absam (AT)**

(72) Erfinder: **ZIMMERMANN, Andreas
6166 Fulpmes (AT)**

(74) Vertreter: **Burger, Hannes
Anwälte Burger & Partner
Rechtsanwalt GmbH
Rosenauerweg 16
4580 Windischgarsten (AT)**

(56) Entgegenhaltungen:
**EP-A2- 1 801 614        EP-A2- 2 148 165
AT-A1- 511 318        GB-A- 2 512 915
US-A1- 2015 034 722        US-A1- 2016 202 021
US-B1- 8 172 139**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Ermittlung einer Ersatzdistanz zwischen einem Standort und einem Auftreffpunkt eines Geschoßes in einer mit dem Standort gemeinsamen Horizontalebene zum Anvisieren eines Ziels für einen Winkelschuss mit einem Höhenwinkel mit einer Anzeige für einen Wert der Ersatzdistanz, mit einem Entfernungsmesser zum Messen einer Zieldistanz und mit einem Neigungssensor zum Messen des Höhenwinkels zwischen einer Sichtlinie zu dem Ziel und der Horizontalebene, wobei die Vorrichtung einen Mikroprozessor umfasst, der dazu ausgebildet ist, als Ersatzdistanz eine äquivalente horizontale Entfernung durch Korrigieren der Zieldistanz mit einem Korrekturkoeffizienten zu berechnen.

Die Erfindung betrifft auch eine fernoptische Vorrichtung, insbesondere Zielfernrohr oder binokulares oder monokulares Fernrohr, mit einer Vorrichtung zur Bestimmung einer anstelle der Zieldistanz zu berücksichtigenden Ersatzdistanz zum Anvisieren eines Ziels mit der Zieleinrichtung einer Schusswaffe und einer Anzeige zur Darstellung eines Werts der Ersatzdistanz beim Anvisieren für einen Schützen.

Zieleinrichtungen, insbesondere Zielfernrohre, werden üblicherweise auf der Waffe montiert und in Verbindung mit dieser eingeschossen. Unter Waffen sind solche Waffen zu verstehen, welche ein Projektil unter einer gestreckten bzw. leicht gekrümmten Flugbahn direkt auf ein Ziel abfeuern. Dieses Einschießen erfolgt bei einer festen Schussentfernung von beispielsweise 100 m mit einer horizontal ausgerichteten Visierlinie auf ein Ziel und unter Verwendung einer für die Waffe typischen Munition (Laborierung). Zur Kompensation des Geschoßabfalls auf ihrer Flugbahn zwischen der Schusswaffe und dem Ziel ist die Laufachse der Schusswaffe um einen Aufsatzwinkel relativ zu der Visierlinie der Zielfeinrichtung geneigt. Beim Einschießen der Schusswaffe wird dieser Aufsatzwinkel so eingestellt, dass der tatsächliche Auftreffpunkt des Geschoßes mit dem gewünschten Auftreffpunkt, das heißt dem anvisierten Ziel zusammenfällt. Bei einem realen Schuss in der praktischen Anwendung müssen Abweichungen zu diesen Einschießbedingungen berücksichtigt werden. Einflussfaktoren, die eine Veränderung der Ballistik bewirken, sind beispielsweise Luftdruck und Lufttemperatur, die Anfangsgeschwindigkeit und der Widerstandsbeiwert bzw. ballistische Koeffizient des Geschoßes, seitliches Verkanten der Schusswaffe oder ein Winkelschuss nach oben oder nach unten.

Die Abweichung bei einem Winkelschuss entsteht durch die veränderte Richtung der Geschoßbewegung relativ zur Richtung der auf das Geschoß wirkenden Schwerkraft. Ein Vergleich der Geschoßflugbahn beim Winkelschuss mit der Geschoßflugbahn bei einem horizontalen Schuss zeigt, dass die Geschoßflugbahn bei einem Winkelschuss relativ zur Visierlinie etwas flacher verläuft. Bliebe die Visierlinie bzw. der Haltepunkt auf das Ziel wie bei einem horizontalen Schuss gerichtet, würde es zu einem sogenannten Hochschuss kommen. Ein solcher kann verhindert werden, indem der Abgangswinkel (Erhöhung), das heißt der Winkel zwischen der Laufachse und einer horizontalen Ebene verringert wird. Dies kann entweder durch Verringerung des Aufsatzwinkels (Visierwinkel) oder des Höhenwinkels (Geländewinkel) erfolgen. Diese Korrektur des Werts des Abgangswinkels, mit dem die Zieleinrichtung relativ zum Ziel bzw. die Korrektur, mit dem die Visierlinie auf das Ziel ausgerichtet wird, ist gleichbedeutend mit der Berücksichtigung einer Ersatzdistanz, die anstelle der tatsächlichen Zieldistanz für das Anvisieren des Ziels verwendet wird. Ist zum Beispiel die Waffe auf einen 400m Fleckschuss in der Horizontalen eingestellt, so würde bei derselben Schussentfernung von 400m aber unter einem Geländewinkel von 30° das Ziel mit einem Hochschuss von typischerweise 15-20cm verfehlt werden. Um bei diesem Geländewinkel von 30° doch noch das Ziel sicher treffen zu können, kann anstelle der Zielentfernung von 400m das Ziel so anvisiert werden, als ob es sich in einer horizontalen Entfernung von etwa 350m befinden würde. Dies kann auch ausgedrückt werden durch den Begriff der äquivalenten horizontalen Entfernung E.

Diese ist beispielsweise bei Verwendung eines sogenannten ballistischen Absehens (Fadenkreuz) von Bedeutung, wobei in dem Absehen unterschiedliche vertikale Markierungen vorgesehen sind, die unterschiedlichen Fleckschussentfernungen entsprechen. Wird nun bei einem Winkelschuss das Ziel mit einem ballistischen Absehen so anvisiert, als ob sich das Ziel nicht in der tatsächlichen Entfernung D sondern in einer gemeinsamen Horizontalebene mit der Schusswaffe unter einer Zieldistanz mit einem Wert entsprechend der äquivalenten horizontalen Entfernung befinden würde, so ist nun auch ein Fleckschuss gewährleistet. Eine andere Möglichkeit der Berücksichtigung der erforderlichen Korrektur der Ausrichtung der Schusswaffe bzw. der Zieleinrichtung zum Anvisieren des Ziels besteht darin, über den Höhenturm der Zieleinrichtung das Absehen (Fadenkreuz) der Höhe nach entsprechend der äquivalenten horizontalen Entfernung zu justieren. Andererseits sind auch moderne Zieleinrichtungen bekannt, die integrierte ballistische Rechner aufweisen und notwendige Korrekturen unter Berücksichtigung des Geländewinkels entweder numerisch oder in Form von variablen Haltepunkten anzeigen.

Allen diesen Möglichkeiten gemeinsam ist das Erfordernis, durch irgendein Verfahren in möglichst zuverlässiger Weise das Ausmaß der erforderlichen Korrektur bei einem Winkelschuss zu bestimmen bzw. zu berechnen. Es ist somit die Aufgabe der vorliegenden Erfindung ein Verfahren bzw. eine Vorrichtung anzugeben, mit dem/der bei Ausführung eines Winkelschusses mit einer Schusswaffe auf vereinfachte Weise eine hohe Treffsicherheit erreicht werden kann.

Ein Verfahren, eine Vorrichtung sowie eine fernoptische Vorrichtung der eingangs genannten Art sind aus der AT 511 318 B1 bekannt geworden. Bei dem bekannten Verfahren ist es jedoch erforderlich, Wertepaaren von Höhenwinkeln und gemessenen Distanzen zum Ziel entsprechende Korrekturkoeffizientenwerte aus einer Tabelle zuzuordnen.

Ein ähnliches Verfahren ist in der EP2148165A2 beschrieben. Weitere einschlägige Verfahren sind aus der US8172139B1 und der EP1801614A2 bekannt geworden.

Aufgabe der vorliegenden Erfindung war es, eine möglichst einfache Lösung zur Bestimmung der horizontalen Ersatzdistanz bei einem Winkelschuss zur Verfügung zu stellen, welche sich durch eine hohe Genauigkeit unter geringem Rechenaufwand bei der Bestimmung der Ersatzdistanz auszeichnet.

Diese Aufgabe wird mit einer Vorrichtung der eingangs genannten Art gelöst wobei ein Mikroprozessor erfindungsgemäß dazu eingerichtet ist, einen zumindest einer Näherungslösung eines Kosinus eines Ersatzhöhenwinkels entsprechenden Wert als Korrekturkoeffizienten zu verwenden, wobei der Ersatzhöhenwinkel dem mit einem Höhenwinkelkorrekturparameter korrigierten Höhenwinkel entspricht, und/oder einen mit einem Korrekturwert korrigierten Betrag eines zumindest einer Näherungslösung eines Kosinus des Höhenwinkels oder des Ersatzhöhenwinkels entsprechenden Wertes als Korrekturkoeffizienten zu verwenden.

Bei einer bevorzugten Variante der Erfindung kann es vorgesehen sein, dass der Entfernungsmesser einen Laser-Entfernungsmesser umfasst.

Gemäß einer vorteilhaften Variante der Erfindung kann die Vorrichtung einen Speicher umfassen, in welchem unterschiedlichen Werte des Höhenwinkels entsprechende Werte des Höhenwinkelkorrekturparameters und/oder unterschiedlichen Werten des Höhenwinkels entsprechende Korrekturkoeffizienten und/oder unterschiedlichen Werten des Höhenwinkels entsprechende äquivalente horizontale Entfernungen in Form einer Tabelle hinterlegt sind.

Die der Erfindung zugrundeliegende Aufgabe lässt sich aber auch mit einer fernoptischen Vorrichtung der oben genannten Art erfindungsgemäß dadurch lösen, dass die Vorrichtung zur Bestimmung der anstelle der Zieldistanz zu berücksichtigenden Ersatzdistanz als Vorrichtung gemäß einem der Ansprüche 11 bis 13 ausgebildet ist.

Eine Ausführungsform, welche es einem Schützen ermöglicht, den Blick nicht von dem anvisierten Ziel nehmen zu müssen, um die Anzeige lesen zu können, besteht darin, dass die Anzeige in den Sichtkanal, insbesondere in den optischen Strahlengang, der Zieleinrichtung integriert ist.

Eine sehr exakte Bestimmung der Distanz zwischen dem Schützen und dem Ziel in Ausrichtung mit dem Lauf der Waffe, lässt sich dadurch erzielen, dass ein Entfernungsmesser zum Messen einer Zieldistanz in den optischen Strahlengang der Zieleinrichtung integriert ist.

Zum besseren Verständnis der Erfindung wird diese anhand der nachfolgenden Figuren näher erläutert.

Es zeigen jeweils in stark vereinfachter, schematischer Darstellung:

Fig. 1     eine relative räumliche Anordnung bei einem Winkelschuss eines Schützen auf ein in erhöhter Lage angeordnetes Ziel;

Fig. 2     eine Gegenüberstellung der Trajektorien eines Geschoßes beim Anvisieren des Ziels bei einem Winkelschuss und bei einem horizontalen Schuss;

Fig. 3     ein Bild beim Blick durch eine Zieleinrichtung beim Anvisieren des Ziels gemäß Fig. 2;

Fig. 4     eine Vorrichtung zur Bestimmung der äquivalenten horizontalen Entfernung E mit dem Blick durch eine Zieleinrichtung gemäß Fig. 3;

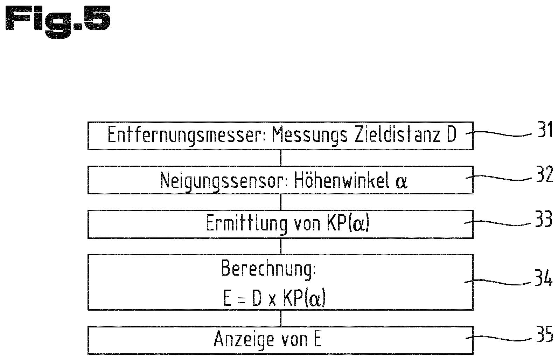

Fig. 5     ein Flussdiagramm der Verfahrensschritte des Verfahrens zur Bestimmung der äquivalenten horizontalen Entfernung E;

Fig. 6     das Anvisieren eines Ziels mit der Zieleinrichtung einer Schusswaffe;

Fig. 7     das Anvisieren des Ziels gemäß Fig. 6 unter Berücksichtigung der erfindungsgemäßen Korrektur.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

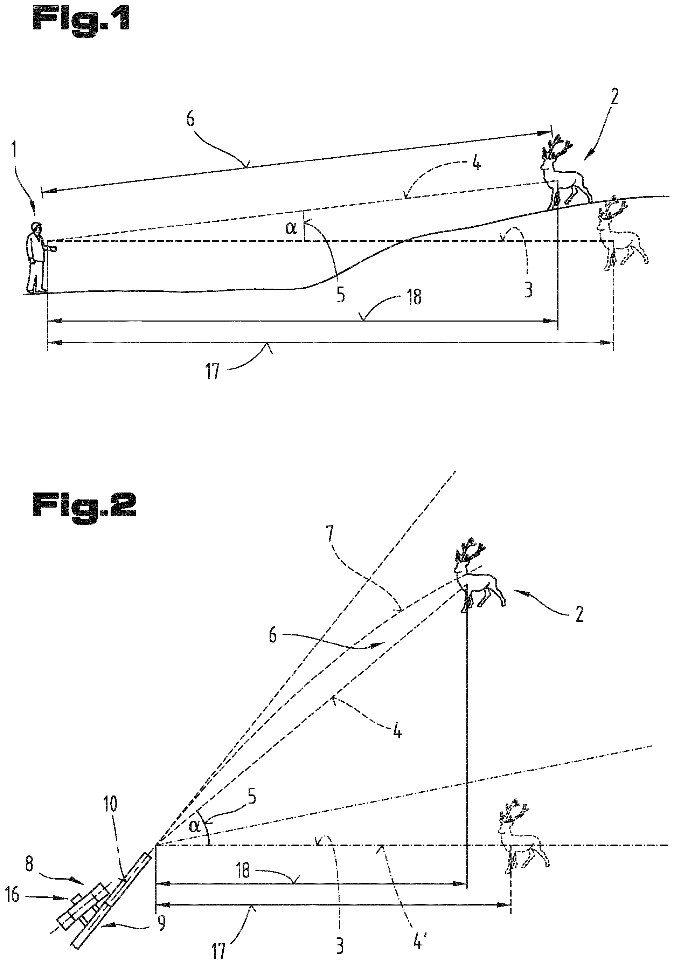

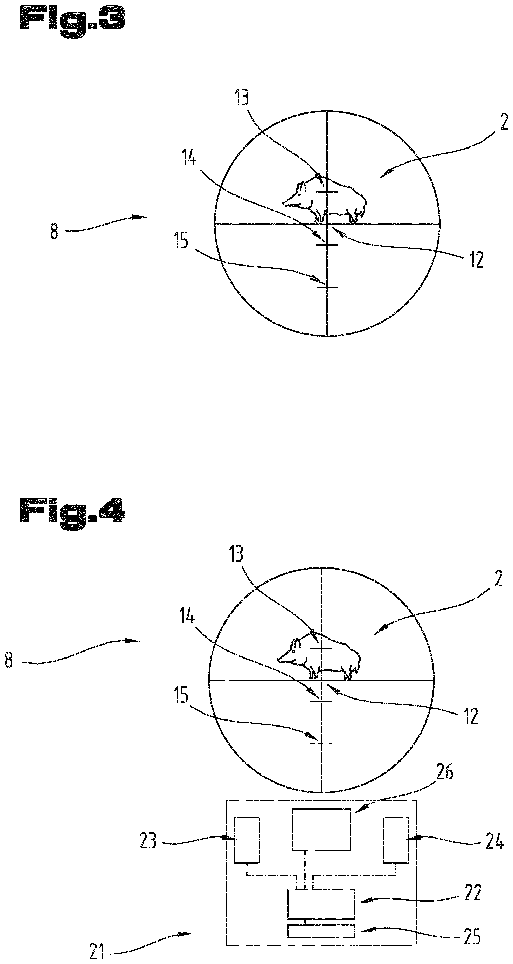

Die Fig. 1 zeigt die relative räumliche Anordnung bei einem Winkelschuss nach oben von einem Schützen 1 auf ein Ziel 2. Das Ziel 2 befindet sich dabei in einer relativ zu einer dem Schützen 1 zugeordneten Horizontalebene 3 erhöhten Position. Eine Sichtlinie 4 bzw. Visierlinie zwischen dem Schützen 1 und dem Ziel 2 schließt demnach mit der Horizontalebene 3 einen sogenannten Höhenwinkel (Geländewinkel) $\alpha$ 5 ein. Durch die Länge der Sichtlinie 4 bzw. den Abstand zwischen dem Schützen 1 und dem Ziel 2 ist weiters eine Zieldistanz D 6 definiert. Beim Anvisieren des Ziels 2 mit einer Schusswaffe 9 (Fig. 2) muss der Schütze 1 nun neben der Zieldistanz D 6 auch den Höhenwinkel $\alpha$ 5 mitberücksichtigen. Dies ist aber nicht schon dadurch in ausreichender Weise erfüllt, dass der Schütze die Schusswaffe lediglich um den Höhenwinkel $\alpha$ 5 nach oben verschwenkt und eine Zielmarke (Fig. 3) mit dem Ziel 2 zur Deckung bringt, die gerade dem Wert der Zieldistanz D 6 für einen Horizontalschuss entspricht. Es muss nämlich außerdem noch eine Korrektur berücksichtigt werden, die darin ihre Ursache hat, dass eine Trajektorie 7 eines Geschoßes bei einem Winkelschuss relativ zur Visierlinie weniger gekrümmt ist als bei einem horizontalen Schuss.

Die Fig. 2 zeigt die Trajektorie 7 eines Geschoßes beim Anvisieren des Ziels 2 mit einer Zieleinrichtung 8 einer Schusswaffe 9 bei einem Winkelschuss nach oben unter dem Höhenwinkel $\alpha$ 5.

Eine Laufachse 10 der Schusswaffe 9 ist relativ zu der Visierlinie bzw. Sichtlinie 4 der Zieleinrichtung 8 um einen Aufsatzwinkel 11 verschwenkt angeordnet. Dieser Aufsatzwinkel 11 ist beim Einschießen der Schusswaffe 9 derart justiert, dass die Trajektorie des Geschoßes die Horizontalebene 3 in der Einschießdistanz schneidet. Damit wird gerade die Einschießbedingung erfüllt, dass der tatsächliche Auftreffpunkt des Geschoßes mit dem gewünschten Auftreffpunkt des in der Einschießdistanz angeordneten Ziels zusammenfällt.

Das Einschießen der Schusswaffe 9 erfolgt in üblicher Weise dadurch, dass eine Folge von Schüssen auf ein sich in der Einschießdistanz befindliches Ziel ausgeführt wird. Das heißt, die Entfernung zwischen dem Standort des Schützen 1 bzw. der Mündung der Schusswaffe 9 und dem Ziel wird gleich der Einschießdistanz gewählt, wobei sich außerdem die Mündung der Schusswaffe 9 und das Ziel in der gemeinsamen Horizontalebene 3 befinden. Wird nun nach einem Schuss auf das Ziel Z eine Abweichung des Auftreffpunkts des Geschoßes von dem Ziel festgestellt, so wird eine Veränderung der Relativstellung zwischen der Sichtlinie 4 und der Laufachse 10 der Schusswaffe 9 vorgenommen, mit der erreicht werden soll, dass der Auftreffpunkt des Geschoßes bei Ausführung eines weiteren Schusses näher an dem Ziel Z zu liegen kommt. Eine solche Veränderung der Relativstellung der Sichtlinie 4 relativ zu der Laufachse 10 der Waffe 9 wird üblicherweise dadurch vorgenommen, dass an einem Höhenturm 16 der Zieleinrichtung 8 bzw. eines Zielfernrohrs eine Verstellung vorgenommen wird, durch die der Verlauf der Sichtlinie 4 durch den visuellen Strahlengang der Zieleinrichtung 8 hindurch verändert wird. Durch eine solche Veränderung können sowohl Abweichungen des Auftreffpunktes des Geschoßes von dem Ziel in vertikaler als auch mit einem äquivalenten Seitenturm in horizontaler Richtung kompensiert werden. Zur Verringerung einer Abweichung in vertikaler Richtung wird bei einer solchen Einstellung an dem Höhenturm 16 der Aufsatzwinkel 11 verändert. Zum Einschießen der Schusswaffe 9 wird die Folge von Probeschüssen und Neueinstellungen der Relativstellung der Sichtlinie 4 relativ zu der Laufachse 10 der Waffe 9 so lange fortgesetzt bis eine ausreichend hohe Treffsicherheit erreicht wird.

Gemäß einer verallgemeinerten Vorgehensweise erfolgt das Einschießen der Schusswaffe 9 unter einem gegenüber der Horizontalebene 3 geneigten Einschießwinkel mit einem vordefinierten Wert. Dies kann für eine Schusswaffe 9 günstig sein, die beispielsweise regelmäßig von einem Hochsitz über einem sonst ebenen, horizontalen Gelände abgefeuert wird. Für eine solche Anwendung kann das Einschießen der Schusswaffe 9 unter einem vorgewählten Einschießwinkel mit einem negativen Wert erfolgen. Dies erfolgt wiederum dadurch, dass mit der Schusswaffe 9 eine Folge von Probeschüssen und Neueinstellungen der Relativstellung der Sichtlinie 4 relativ zu der Laufachse 10 der Waffe 9 solange fortgesetzt wird, bis eine ausreichend hohe Treffsicherheit erreicht ist.

Wird nun die Schusswaffe 9 auf das über der Horizontalebene 3 erhöht angeordnete Ziel 2 gerichtet und dazu die Visierlinie bzw. Sichtlinie 4 der Zieleinrichtung 8 auf das Ziel 2 ausgerichtet, so muss eine Veränderung der Flugbahn eines mit der Schusswaffe 9 abgeschossenen Geschoßes berücksichtigt werden, wobei die Trajektorie 7 des Geschoßes nun relativ zur Visierlinie etwas flacher verläuft, das heißt eine geringere Krümmung aufweist als im Fall des Horizontalschuss. Das Ziel 2 wird durch die Trajektorie 7 somit oberhalb verfehlt. Dieser Fehler kann dadurch korrigiert werden, dass die Schusswaffe 9 etwas zur Horizontalebene 3 hin verschwenkt wird, sodass die ursprüngliche Visierlinie bzw. Sichtlinie 4 auf einen unterhalb des Ziels 2 liegenden Punkt ausgerichtet ist und die Sichtlinie 4 einen Winkel mit der Horizontalebene 3 einschließt, dessen Wert kleiner ist als der Wert des Höhenwinkels $\alpha$ 5. Eine solche Korrektur wird anhand der nachfolgend beschriebenen Fig. 3 veranschaulicht.

Im Falle der Verwendung einer auf einen - gegenüber der Horizontalebene 3 geneigten - Einschießwinkel eingeschossenen Schusswaffe 9 ist für diese Korrektur anstelle des Höhenwinkels $\alpha$ 5 die Winkeldifferenz zwischen dem Höhenwinkel $\alpha$ 5 und dem Einschießwinkel zu berücksichtigen.

Die Fig. 3 zeigt ein Bild beim Blick durch die Zieleinrichtung 8 beim Anvisieren des Ziels 2 gemäß Fig. 2.

Bei diesem Ausführungsbeispiel weist die Zieleinrichtung 8 eine Zielmarkenanordnung mit einem Fadenkreuz 12 und zusätzlichen Zielmarken 13, 14 und 15 auf. Die Anordnung des Bilds des Ziels 2 relativ zu dem Fadenkreuz 12 bzw. den Zielmarken 13, 14, 15 entspricht jener Situation in der die vorstehend erläuterte Korrektur bereits berücksichtigt ist. Die Sichtlinie 4 der Zieleinrichtung 8 - sie entspricht dem Kreuzungspunkt des Fadenkreuzes 12 - ist auf einen Punkt unterhalb des Ziels 2 ausgerichtet. Demgemäß erscheint das Bild des Ziels 2 oberhalb des Fadenkreuzes 12 - in diesem Fall zur Deckung gebracht mit der Zielmarke 13.

Das Bild gemäß Fig. 3 kann andererseits auch interpretiert werden im Zusammenhang mit der Ausführung eines Horizontalschuss, bei dem sich das Ziel 2 mit der Schusswaffe 9 in derselben Horizontalebene 3 befindet. Ist, wie dargestellt, die oberhalb des Fadenkreuzes 12 angeordnete Zielmarke 13 auf das Ziel 2 ausgerichtet, so kann dieses nur dann von dem Geschoß getroffen werden, wenn seine Entfernung von der Schusswaffe 9 kleiner ist als die Einschießdistanz (entsprechend Fadenkreuz 12). Für Horizontalschüsse können somit der Zielmarke 13, dem Fadenkreuz 12, der Zielmarke 14 und der Zielmarke 15 unterschiedliche Werte der Zieldistanz D 6 zugeordnet werden. Und zwar sind die Werte der Zieldistanz D 6 in der gleichen Reihenfolge ansteigend (Zielmarke 13, Fadenkreuz 12, Zielmarke 14 und Zielmarke 15). Dies könnte beispielsweise im Rahmen einer Kalibrierung der Zielmarkenanordnung mit entsprechenden Zieldistanzen D 6 erfolgen.

Die den Zielmarken 13, 14, 15 und dem Fadenkreuz 12 zugeordneten Werte der Zieldistanz D 6 für Horizontalschüsse sind nun aber auch bei Winkelschüssen unter einem Höhenwinkel $\alpha$ 5 von Bedeutung, in dem sie als sogenannte äquivalente horizontale Entfernung E 17 zur Berücksichtigung der vorbeschriebenen Korrektur der Ausrichtung der Schusswaffe 9 bzw. der Sichtlinie 4 der Zieleinrichtung 8 auf das Ziel 2 verwendet werden. Auf diese Weise wird von dem Schützen 1 anstelle des Werts der tatsächlichen Zieldistanz D 6 eine Ersatzdistanz für das Anvisieren verwendet.

Von entscheidender Bedeutung ist nun, die erforderliche Korrektur quantitativ bestimmen zu können. Dazu ist eine als "Rifleman's Rule" bezeichnete Faustregel bekannt, nach der die Zieldistanz D 6 mit dem Kosinus des Höhenwinkels $\alpha$ 5 zu multiplizieren ist, um den Wert der einer angenäherten äquivalenten horizontalen Entfernung $E_{RR}$ 18 zu erhalten.

$$E_{RR} = D \text{ x } \cos(\alpha) \hspace{4cm} \text{Gl. 1}$$

Wird nun bei einem Winkelschuss unter einem Höhenwinkel $\alpha$, 5 die Zieleinrichtung 8 so eingestellt, als ob sich das Ziel 2 in derselben Horizontalebene 3 wie die Schusswaffe 9 und in der äquivalenten horizontalen Entfernung $E_{RR}$ befinden würde, so ist nun das Treffen des Ziels 2 (ein Fleckschuss) unter bestimmten Umständen gewährleistet.

Die Berechnung der äquivalenten horizontalen Entfernung $E_{RR}$ 18 nach der Rifleman's Rule, entsprechend vorstehend angegebener Gleichung 1, ist jedoch nur eine Näherung, die nur bei Zieldistanzen D 6 bis ca. 300 m und Werten des Höhenwinkels $\alpha$ 5 bis ca. 30° ausreichend genaue Ergebnisse liefert.

Eine Möglichkeit zur Durchführung des erfindungsgemäßen Verfahrens zur Bestimmung einer äquivalenten horizontalen Entfernung E 17 zum Anvisieren eines Ziels 2 mit einer Zieleinrichtung 8 einer Schusswaffe 9 wird anhand von Fig. 4 erläutert. Dazu ist eine Vorrichtung 21 zur Bestimmung der äquivalenten horizontalen Entfernung E 17 vorgesehen, die vorzugsweise mit einem zentralen Mikroprozessor 22 zur automatisierten Durchführung des Verfahrens ausgestattet ist. Diese Vorrichtung 21 umfasst weiters einen Entfernungsmesser 23 zum Messen der Zieldistanz D 6 und einen Neigungssensor 24 zum Messen des Höhenwinkels $\alpha$ 5, unter dem das Ziel 2 dem Schützen 1 erscheint. Anhand der Werte zur Zieldistanz D 6 und dem Höhenwinkel $\alpha$ 5 sowie eines Höhenwinkelkorrekturparameters k und/oder eines Korrekturwertes KW berechnet der Mikroprozessor 22 ohne Berücksichtigung weiterer Daten eine entsprechende Korrektur. Das Ergebnis der Berechnung wird auf einer Anzeige 26 dargestellt. Der Schütze 1 kann sodann durch Auswahl jener Zielmarke, die der angezeigten äquivalenten horizontalen Entfernung E 17 entspricht (gemäß diesem Ausführungsbeispiel, die Zielmarke 13) die Schusswaffe 9 bzw. die Zieleinrichtung 8 auf das Ziel 2 ausrichten oder eine Änderung des Aufsatzwinkels durch eine Verstellung am Höhenturm entsprechend der angezeigten äquivalenten horizontalen Entfernung E 17 vornehmen und einen Schuss ausführen.

Die Vorrichtung 21 zur Bestimmung der äquivalenten horizontalen Entfernung E 17 kann sowohl als ein von der Schusswaffe 9 bzw. der Zieleinrichtung unabhängiges Gerät ausgeführt sein, kann aber alternativ auch einen Bestandteil der Schusswaffe 9 oder der Zieleinrichtung 8 bilden. Im zuletzt genannten Fall ist die Anzeige 26 der Vorrichtung 21 vorzugsweise in den Strahlengang der Zieleinrichtung 8 integriert. Die Anzeige 26 ist dazu in einer der Bildebenen der Optik der Zieleinrichtung 8 eingeblendet, sodass der Wert der berechneten äquivalenten horizontalen Entfernung E 17 dem Schützen 1 in dem gleichen durch die Zieleinrichtung 8 dargestellten Gesichtsfeld erscheint.

Gemäß einer alternativen Ausbildung einer Kombination der Vorrichtung 21 mit einer fernoptischen Vorrichtung, beispielsweise einer Zieleinrichtung 8, erfolgt anstatt einer numerischen Anzeige der äquivalenten horizontalen Entfernung E 17 auf der Anzeige 26 durch den Mikroprozessor 22 die Berechnung eines variablen Haltepunktes und dessen automatisiertes Einblenden in den Strahlengang der Zieleinrichtung 8, das heißt der Anzeige einer entsprechend positionierten Zielmarke 13, 14, 15. Es ist aber auch denkbar, mittels einer automatischen (motorisierten) mechanischen Verstellung des Höhenturms oder einer Verstellung der Visierlinie durch Verschieben eines optischen Elementes im Strahlengang der Zieleinrichtung die notwendige Korrektur zu berücksichtigen.

Von Vorteil ist weiters eine Ausführung der fernoptischen Vorrichtung, bei der der Entfernungsmesser 23 in den optischen Strahlengang der Zieleinrichtung 8 zumindest teilweise integriert ist. Dies kann beispielsweise dadurch realisiert sein, dass - z.B. bei Ausführung des Entfernungsmessers 23 durch einen Laserentfernungsmesser - der zu dem Ziel 2 ausgesendete Laserstrahl und/oder das von dem Ziel 2 reflektierte Laserlicht durch das Objektiv der fernoptischen Vorrichtung hindurch verläuft.

Die Bestimmung der äquivalenten horizontalen Entfernung E 17 kann beispielsweise allein auf Basis der Messung der Zieldistanz D 6 und eines korrigierten Werts des Höhenwinkels α 5 erfolgen.

Es hat sich nämlich überraschenderweise gezeigt, dass mit der erfindungsgemäßen Lösung die Einschränkung der Rifleman's Rule auf kurze Distanzen und kleine Höhenwinkel überwunden werden kann. Eine ausreichend genaue Berechnung der äquivalenten horizontalen Entfernung E 17 zum Anvisieren des Ziels 2 ist somit für wesentlich weitere Entfernungen und größere Geländewinkel möglich.

Die Bestimmung der äquivalenten horizontalen Entfernung E 17 kann gemäß der Erfindung mit einem Korrekturkoeffizienten KK erfolgen für den gilt:

$$KK = \cos(\alpha(k)), \hspace{4cm} \text{Gl. 2}$$

$$\text{speziell } KK = \cos(\alpha \times k)$$

In Gl.2 wird dabei ein Ersatz-Höhenwinkel a(k) verwendet, der selbst wieder eine Funktion eines Höhenwinkelkorrekturparameters k ist.

Die Berechnung der äquivalenten horizontalen Entfernung E 17 ergibt sich aus der gemessenen Zieldistanz D zu:

$$E = D \times KK$$

Der Höhenwinkelkorrekturparameter k, bei dem es sich um eine dimensionslose Zahl handeln kann, kann hierbei einen Wert aufweisen, der kleiner als 1 ist. Für den Wert 1 geht die Gleichung 3 in die Rifleman's Rule über. Als besonders vorteilhaft hat es sich herausgestellt, wenn der Höhenwinkelkorrekturparameter k kleiner als 1 und größer als 0,8, insbesondere zwischen 0,85 und 0,95 ist. Für einen konstanten Wert von 0,9 haben sich besonders gute Resultate ergeben.

In Tabelle 1 ist ein Ausführungsbeispiel dargestellt, in welchen die durch Auswertung vieler ballistischer Analysen ermittelten Werte für den Korrekturkoeffizienten KKB für Distanzen D zum Ziel dem mittels des erfindungsgemäßen Verfahrens ermittelten Korrekturkoeffizienten KK für Höhenwinkel a, 5 von 10° und 30° gegenübergestellt werden. Als Wert für den Höhenwinkelkorrekturparameter k wurde hierbei 0,9 angenommen.

Tabelle 1:

| | D[m] | k | KKB | KK | KK$_{RR}$ | KKB-KK | KKB-KK$_{RR}$ | □KK□D | □KK$_{RR}$□D |
|---|---|---|---|---|---|---|---|---|---|
| 10° | 100 | 0,9 | 0,986 | 0,988 | 0,985 | -0,002 | 0,001 | -0,2 | 0,1 |
| | 200 | 0,9 | 0,987 | 0,988 | 0,985 | -0,001 | 0,002 | -0,2 | 0,4 |
| | 300 | 0,9 | 0,989 | 0,988 | 0,985 | 0,001 | 0,004 | 0,3 | 1,2 |
| | 400 | 0,9 | 0,99 | 0,988 | 0,985 | 0,002 | 0,005 | 0,8 | 2 |
| | 500 | 0,9 | 0,991 | 0,988 | 0,985 | 0,003 | 0,006 | 1,5 | 3 |
| 30° | 100 | 0,9 | 0,876 | 0,891 | 0,866 | -0,015 | 0,01 | -1,5 | 1 |
| | 200 | 0,9 | 0,884 | 0,891 | 0,866 | -0,007 | 0,018 | -1,4 | 3,6 |
| | 300 | 0,9 | 0,893 | 0,891 | 0,866 | 0,002 | 0,027 | 0,6 | 8,1 |
| | 400 | 0,9 | 0,902 | 0,891 | 0,866 | 0,011 | 0,036 | 4,4 | 14,4 |
| | 500 | 0,9 | 0,91 | 0,891 | 0,866 | 0,019 | 0,044 | 9,5 | 22 |

Ebenfalls angeführt sind in Tabelle 1 die durch die Anwendung der Rifleman's Rule erzielbaren Werte der Korrekturkoeffizienten KK$_{RR}$, welche dem reinen Kosinus der entsprechenden Winkel (KK$_{RR}$ = cos(10°) bzw. cos(30°)) entsprechen. Diese liefern zwar bei kurzen Distanzen vergleichbar gute Ergebnisse, verschlechtern sich aber bei weiteren Distanzen. Deutlich sichtbar wird dies in den Differenzen der äquivalenten horizontalen Entfernung in den letzten zwei Spalten, welche bei der Rifleman's Rule in etwa den doppelten absoluten Fehler aufweisen als beim erfindungsgemäßen Verfahren.

Wird, wie in den Tabellen 1, beispielsweise ein Wert von 0,9 für den Höhenwinkelkorrekturparameter k verwendet, so entspricht dies einer Korrektur des Höhenwinkels a, 5 um 10%. D.h. der für die Berechnung verwendete, korrigierte Höhenwinkel ist um 10% kleiner als der gemessene Höhenwinkel α, 5.

Tabelle 2:

| □$_i$ [°] | k$_i$ | KKB(□) | KK(□) | KK$_{RR}$(□) | KKB(□)-KK(□) | KKB(□)-KK$_{RR}$(□) |
|---|---|---|---|---|---|---|
| 10 | 0,906 | 0,988 | 0,988 | 0,985 | 0,000 | 0,003 |
| 20 | 0,907 | 0,951 | 0,950 | 0,940 | 0,001 | 0,012 |
| 30 | 0,909 | 0,890 | 0,889 | 0,866 | 0,001 | 0,024 |
| 40 | 0,913 | 0,804 | 0,804 | 0,766 | 0,000 | 0,038 |
| 50 | 0,918 | 0,693 | 0,696 | 0,643 | -0,003 | 0,050 |

Tabelle 2 zeigt von gemessenen Höhenwinkel a, 5 abhängige Höhenwinkelkorrekturparameter k$_i$. Auch hier ist wieder ersichtlich, dass die Korrektur nach der Rifleman's Rule bei höheren Winkeln deutlich größere Abweichung liefert als das erfindungsgemäße Verfahren.

Die Abhängigkeit des Höhenwinkelkorrekturparameters k$_i$ von dem Höhenwinkel α, 5 lässt sich beispielsweise unter anderem aus den durch ballistische Analysen und weiter optimierten ermittelten Korrekturkoeffizienten KKB wie folgt bestimmen:

$$k_i = \alpha_i^{-1} \times \arccos(KKB_i), \text{ mit } i = 0,.. n ; [n \in \mathbb{N}] \hspace{3cm} \text{Gl. 4}$$

Alternativ kann der Höhenwinkelkorrekturparameter $k_i$ so bestimmt werden, dass beginnend mit einem gemessenen Höhenwinkel von $\alpha$, 5, beispielsweise bei 0°, bei Erhöhung des gemessenen Höhenwinkels $\alpha$, 5 der Wert von $k_i$ eine Korrektur um einen mit dem Höhenwinkel $\alpha$, 5 fallenden Prozentsatz des gemessenen Wertes korrigiert wird. Beispielweise kann für gemessenen Höhenwinkel $\alpha$ zwischen 10° - 15° eine Korrektur der gemessenen Werte um 10% erfolgen. Bei gemessenen Höhenwinkel $\alpha$ zwischen 15° - 20° kann eine kleinere Korrektur beispielsweise um 9% durchgeführt werden etc.

Aus den Tabellen 1 und 2 ist ersichtlich, dass der Höhenwinkelkorrekturparameter k kleiner als 1, insbesondere kleiner als 1 und größer als 0,8, ist.

Wie aus den obigen Ausführungsbeispielen hervorgeht, weichen die in der erfindungsgemäßen Methode verwendeten Korrekturkoeffizienten KK nur gering von den durch ballistische Analysen gewonnenen Werten der Korrekturkoeffizienten KKB ab. Mit der erfindungsgemäßen Methode lässt sich bei einem Winkelschuss mit geringem Aufwand und weitgehend unabhängig von der verwendeten Munition und der Distanz D zum Ziel die äquivalente Horizontalentfernung E 17 mit relativ hoher Genauigkeit bestimmen.

Alternativ zu Gleichung 2 kann der Wert des Korrekturkoeffizienten KK beispielsweise auch auf die folgenden Arten berechnet bzw. angewandt werden:

$$KK = \cos(\alpha^k) \hspace{4cm} \text{Gl. 5}$$

$$KK = \cos(\alpha +/- k) \hspace{3.7cm} \text{Gl. 6}$$

$$KK = \cos(\alpha \times k) \hspace{4cm} \text{Gl. 7}$$

$$KK = \cos^k(\alpha) \hspace{4.2cm} \text{Gl. 8}$$

$$KK = KW \times \cos(\alpha) \hspace{3.5cm} \text{Gl. 9}$$

$$KK = KW +/- \cos(\alpha) \hspace{3.3cm} \text{Gl. 10}$$

$$KK = KW \times \cos(\alpha \times k) \hspace{3cm} \text{Gl. 11}$$

$$KK = KW +/- \cos(\alpha \times k) \hspace{2.8cm} \text{Gl. 12}$$

$$KK = KW \times \cos^k(\alpha) \hspace{3.2cm} \text{Gl. 13}$$

$$KK = KW \times \cos(\alpha^k) \hspace{3.2cm} \text{Gl. 14}$$

$$KK = KW \times \cos(\alpha +/- k) \hspace{2.9cm} \text{Gl.15}$$

$$KK = KW +/- \cos(\alpha +/-k) \hspace{2.7cm} \text{Gl. 16}$$

$$KK = KW +/- \cos(\alpha^k) \qquad\qquad \text{Gl. 17}$$

$$KK = KW +/- \cos^k(\alpha) \qquad\qquad \text{Gl. 18}$$

$$KK = \cos^{KW}(\alpha(k)) \qquad\qquad \text{Gl. 19}$$

In den Gleichungen 5 bis 19 bedeuten: KK den Korrekturkoeffizienten, KW den Korrekturwert, k den Höhenwinkelkorrekturparameter, $\alpha$ den gemessenen Höhenwinkel.

Die Werte des Korrekturwertes KW lassen sich beispielsweise aus Gleichsetzen der Gleichungen 8 -19 mit der Gleichung 7 ermitteln, wobei für den Höhenwinkelkorrekturparameter k, entweder ein für alle ermittelten Höhenwinkel $\alpha$, 5 konstanter Wert, beispielsweise 0,9 oder 0,85 oder ein variabler von den ermittelten Höhenwinkeln a, 5 abhängiger Höhenwinkelkorrekturparameter k verwendet wird, beispielswiese die in Tabelle 2 angegebenen Werte für k.

Kommen bei dem Verfahren die Gleichungen 2 oder 5 bis 7 zum Einsatz, so entspricht dies einem Berechnen eines Ersatzhöhenwinkels aus dem gemessenen Höhenwinkel $\alpha$, 5 anhand zumindest eines Höhenwinkelkorrekturparameters k und Ermittlung eines einem Kosinus des Ersatzhöhenwinkels entsprechenden Wertes als Korrekturkoeffizienten KK in einem Schritt i).

Kommt hingegen eine der Gleichungen 8 bis 19 zur Berechnung des Korrekturkoeffizienten KK zum Einsatz, so entspricht dies einem Berechnen eines einem Kosinus des ermittelten Höhenwinkels $\alpha$, 5 oder des Ersatzhöhenwinkels entsprechenden Wertes und Ermitteln des Korrekturkoeffizienten KK aus dem dem Kosinus des ermittelten Höhenwinkels $\alpha$, 5 oder des Ersatzhöhenwinkels entsprechenden Wert und zumindest einem Korrekturwert KW in einem Schritt i').

An dieser Stelle sei angemerkt, dass der in Gleichung 8 angeführte Korrekturparameter k auch als Korrekturwert KW verstanden werden kann, da der dem Kosinus des ermittelten Höhenwinkels $\alpha$, 5 entsprechende Wert potenziert wird. Der Korrekturwert KW kann also von seinem Wert her dem Höhenwinkelkorrekturparameter k entsprechen.

Der in Gleichung 8 verwendete Höhenwinkelkorrekturparameter k kann aber auch denselben Wert aufweisen, wie der in Gleichung 2 verwendete Höhenwinkelkorrekturparameter k.

In einem Schritt i) oder i') nachfolgendem Schritt ii) wird anhand des ermittelten Wertes des Korrekturkoeffizienten KK die äquivalente horizontale Entfernung E 17 gemäß Gleichung 2 errechnet. Der in Schritt i') verwendete Korrekturwert KW laut Gleichung 9, 11, 13-15 ist bevorzugt kleiner als 1, insbesondere kleiner als 1 und größer als 0,7.

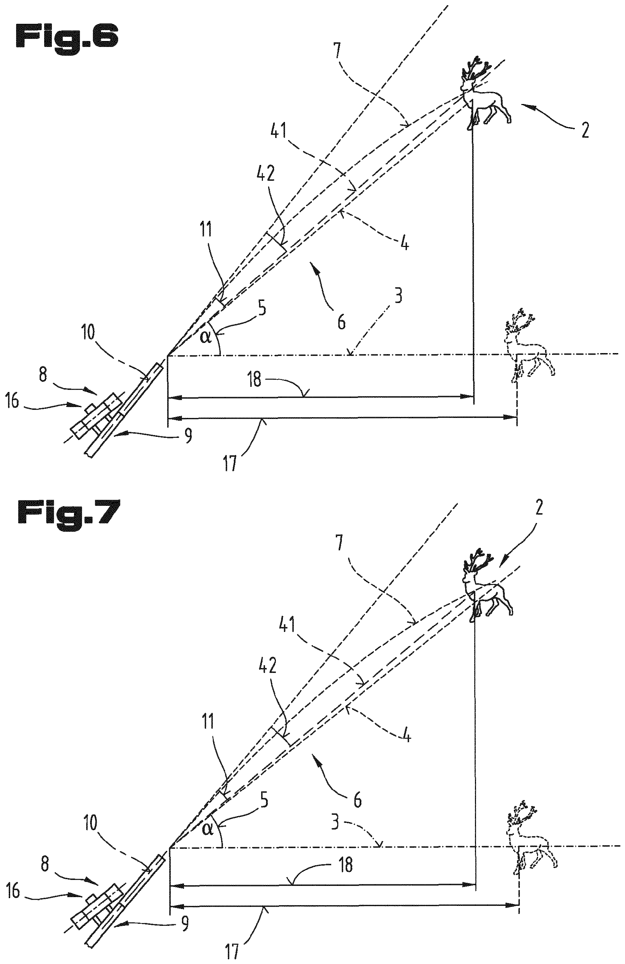

Anhand der Darstellungen in den Fig. 6 und 7 wird die Ausführung eines Winkelschusses unter Anwendung des erfindungsgemäßen Verfahrens näher beschrieben.

Die Darstellung der Fig. 6 zeigt das Anvisieren des Ziels 2 mit der Zieleinrichtung 8 bei - nach dem Einschießen der Waffe 9 unveränderter - Relativstellung der Sichtlinie 4 durch den visuellen Strahlengang der Zieleinrichtung 8 relativ zu der Laufachse 10 der Schusswaffe 9. Wie vorstehend bei der Beschreibung der Fig. 2 bereits ausgeführt worden ist, ergibt sich in dieser Situation eine Veränderung der Trajektorie 7 des Geschoßes hin zu einer relativ zu der Sichtlinie 4 etwas flacher verlaufenden Flugbahn und würde das Ziel 2 oberhalb verfehlt werden. Verfahrensgemäß wird in dieser Situation kein Schuss auf das Ziel 2 abgefeuert, sondern wird stattdessen durch den Schützen 1 die Vorrichtung 21 (Fig. 4), aktiviert während er das Fadenkreuz 12 auf das Ziel 2 ausgerichtet hält. Damit wird die Messung der Zieldistanz D 6 durch den Entfernungsmesser 23 und die Messung des Höhenwinkels $\alpha$ 5 durch den Neigungssensor 24 auslöst. Auf der Basis der dabei erhaltenen Messwerte erfolgt sodann im Mikroprozessor 22 der Vorrichtung 21 die Ermittlung der äquivalenten horizontalen Entfernung E 17, die schließlich auf der Anzeige 26 zur Darstellung gebracht wird. Im Falle der Verwendung eines Visiers mit mehreren Zielmarken 13, 14, 15 wie in Fig. 4 beschrieben, wird nun der Schütze 1 jene Zielmarke auswählen, die der angezeigten, äquivalenten horizontalen Entfernung E 17 entspricht. Dies ist gleichbedeutend mit der Auswahl einer von der Sichtlinie 4 unterschiedlichen, neuen Visierlinie 41, die mit der Laufachse 10 der Waffe 9 einen relativ zu dem Aufsatzwinkel 11 kleineren Winkel 42 einschließt. Sollte die Vorrichtung 21 nicht in der Zieleinrichtung 8 integriert sein, sondern als eigenständiges Gerät ausgeführt sein, so wird vom Schützen in einem ersten Schritt mit der Vorrichtung 21 die äquivalenten horizontale Entfernung E 17 ermittelt und mit der Zieleinrichtung 8 in einem zweiten Schritt wie oben angeführt weiter vorgegangen.

Der Schütze 1 hat nun die Möglichkeit, die Visierlinie 41 auf das Ziel 2 hin auszurichten. Dazu wird die Waffe 9 von dem Schützen 1 soweit verschwenkt, dass die Visierlinie 41 die neue Sichtlinie auf das Ziel 2 bildet, wodurch sich auch die Flugbahn des Geschoßes gemäß der Trajektorie 7 auf das Ziel 2 hin verändert. Die Laufachse 10 der Waffe 9 ist somit in Fig. 7 gegenüber der Stellung in Fig. 6 um einen Winkel entsprechend der Differenz zwischen dem Aufsatzwinkel 11 und dem neuen Aufsatzwinkel 42 verschwenkt angeordnet.

Gemäß einer alternativen Ausführungsvariante erfolgt das Korrigieren der Ausrichtung der Schusswaffe 9 auf das Ziel 2 hin durch eine Anpassung mit Hilfe einer Verstellung des Höhenturms 16 der Zieleinrichtung 8. Die Relativstellung zwischen der Sichtlinie 4 der Zieleinrichtung 8 und der Laufachse 10 der Waffe 9 wird dabei durch eine direkte Veränderung des Aufsatzwinkels 11 mit Hilfe des Höhenturms 16 erreicht. Das heißt, dass für das Anvisieren des Ziels 2 in beiden Situationen das gleiche Fadenkreuz 12 (Fig. 4) mit dem Ziel 2 zur Deckung gebracht wird. Als Konsequenz daraus wird auch in dieser Variante des Verfahrens die Waffe 9 um einen Winkel entsprechend dem Wert der Differenz zwischen dem ursprünglichen Aufsatzwinkel 11 und dem neuen veränderten Aufsatzwinkel 42 durch den Schützen 1 verschwenkt, um beim Ausführen eines Schusses das Ziel 2 sicher zu treffen. Die beschriebene Verstellung an dem Höhenturm 16 zur Veränderung der Relativstellung zwischen der durch den visuellen Strahlengang der Zieleinrichtung 8 hindurchverlaufenden Sichtlinie 4 und der Laufachse 10 der Waffe 9 kann durch den Schützen 1 händisch vorgenommen werden, wird aber vorteilhafterweise automatisch, zum Beispiel durch eine elektromotorische Verstellung, ausgeführt.

Die erforderliche Korrektur beim Anvisieren eines Zieles 2 bei Ausführung eines Winkelschusses ist somit durch ein Verfahren zum Ermitteln einer Ersatzdistanz zwischen einem Standort eines Schützen 1 und einem Auftreffpunkt eines Geschoßes in der Horizontalebene 3 durchführbar. Die Ersatzdistanz wird dabei anstelle der Zieldistanz D 6 beim Anvisieren durch den Schützen 1 berücksichtigt. Dies setzt zunächst ein Einschießen der Waffe 9 voraus, wobei die Relativstellung der Sichtlinie 4 durch den visuellen Strahlengang der Zieleinrichtung 8 bzw. des Zielfernrohrs relativ zu der Laufachse 10 der Waffe 9 so eingestellt wird, dass für ein vorbestimmbares Geschoß und eine vorbestimmbare Einschießdistanz für Horizontalschüsse eine gewünschte hohe Treffsicherheit erreicht wird. Bei der Durchführung eines Winkelschusses wird sodann die Zieldistanz D 6 zwischen dem Standort und dem Ziel 2, die auf der Sichtlinie 4 angeordnet sind, als auch der Höhenwinkel $\alpha$ 5, der von der Sichtlinie 4 mit der Horizontalebene 3 eingeschlossen wird, ermittelt. Daraufhin wird, basierend auf dem Höhenwinkel $\alpha$ 5 und einem Höhenwinkelkorrekturparameter k, der Wert des Korrekturkoeffizienten KK bestimmt. Durch Anwendung des Korrekturkoeffizienten KK auf den gemessenen Wert der Zieldistanz D 6 wird sodann der Wert einer der äquivalenten horizontalen Entfernung E 17 entsprechenden Ersatzdistanz in einer Horizontalebene 3 bestimmt. Dieser Wert der Ersatzdistanz wird sodann dazu herangezogen, die Relativstellung zwischen der Sichtlinie 4 und der Laufachse 10 der Waffe 9 um die Differenz der vorher ermittelten Zieldistanz und auf die ermittelte Ersatzdistanz zu verändern.

Zur Reduzierung des Rechenaufwandes des Mikroprozessors 22 kann es vorteilhaft sein, die Korrekturkoeffizienten KK oder die Ersatzdistanz laut dem erfinderischen Verfahren in einem vorangehenden Schritt zu berechnen und die Ergebnisse in einer Tabelle (look-up table) in einem Speicher der Vorrichtung 21 zu hinterlegen. Der Mikroprozessor 22 kann somit die entsprechenden Werte des Korrekturkoeffizienten KK oder die Ersatzdistanz aus der Tabelle interpolieren.

Ebenfalls zur Reduzierung des Rechenaufwandes kann es vorteilhaft sein, den vom Höhenwinkel $\alpha$ 5 abhängigen Korrekturkoeffizienten KK laut dem erfinderischen Verfahren in einem vorangehenden Schritt zu berechnen und durch Fit mit einer polynominalen Funktion mit einer Ordnung größer 2 anzunähern, aus welcher der Mikroprozessor 22 in der Vorrichtung 21 die entsprechenden Korrekturwerte einfach ausrechnen kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8, 1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

## Bezugszeichenaufstellung

| | | | |
|---|---|---|---|
| 1. | Schütze | 30. | |
| 2. | Ziel | 31. | Verfahrensschritt |
| 3. | Horizontalebene | 32. | Verfahrensschritt |
| 4. | Sichtlinie | 33. | Verfahrensschritt |

| 5. | Höhenwinkel α | | 34. | Verfahrensschritt |
|---|---|---|---|---|
| 6. | Zieldistanz D | | 35. | Verfahrensschritt |
| 7. | Trajektorie | | | |
| 8. | Zieleinrichtung | | | |
| 9. | Schusswaffe | | | |
| 10. | Laufachse | | | |
| 11. | Aufsatzwinkel | | | |
| 12. | Fadenkreuz | | | |
| 13. | Zielmarke | | | |
| 14. | Zielmarke | | | |
| 15. | Zielmarke | | | |
| 16. | Höhenturm | | | |
| 17. | Äquivalente horizontale Entfernung E | | | |
| 18. | Äquivalente horizontale Entfernung $E_{RR}$ berechnet mit Rifleman's Rule | | | |
| 19. | | | | |
| 20. | | | | |
| 21. | Vorrichtung | | | |
| 22. | Mikroprozessor | | | |
| 23. | Entfernungsmesser | | | |
| 24. | Neigungssensor | | | |
| 25. | Speicher | | | |
| 26. | Anzeige | | | |
| 27. | | | | |
| 28. | | | | |
| 29. | | | | |

**Patentansprüche**

1. Vorrichtung (21) zur Ermittlung einer Ersatzdistanz zwischen einem Standort und einem Ersatzauftreffpunkt eines Geschoßes in einer mit dem Standort gemeinsamen Horizontalebene (3) und zum Anvisieren eines Ziels (2), mit einem Entfernungsmesser (23) zum Messen einer Zieldistanz (D, 6) und mit einem Neigungssensor (24) zum Messen eines Höhenwinkels (a, 5) zwischen einer Sichtlinie (4) zu dem Ziel (2) und der Horizontalebene (3), wobei die Vorrichtung (21) einen Mikroprozessor (22) umfasst, der dazu ausgebildet ist, als Ersatzdistanz eine äquivalente horizontale Entfernung (E 17) für einen Winkelschuss mit einem Höhenwinkel (α, 5) durch Korrigieren der Zieldistanz (D, 6) mit einem Korrekturkoeffizienten (KK) zu berechnen, **dadurch gekennzeichnet, dass** der Mikroprozessor (22) dazu eingerichtet ist, einen zumindest einer Näherungslösung eines Kosinus eines Ersatzhöhenwinkels entsprechenden Wert als Korrekturkoeffizienten (KK) zu verwenden, wobei der Ersatzhöhenwinkel einem mit einem Höhenwinkelkorrekturparameter (k) korrigierten Höhenwinkel (α, 5) entspricht, und/oder einen mit einem Korrekturwert (KW) korrigierten Betrag eines zumindest einer Näherungslösung eines Kosinus des Höhenwinkels (α, 5) oder des Ersatzhöhenwinkels entsprechenden Wertes als Korrekturkoeffizienten (KK) zu verwenden.

2. Vorrichtung nach Anspruch 1, **dadurch gekennzeichnet, dass** der Entfernungsmesser (23) einen Laser-Entfernungsmesser umfasst.

3. Vorrichtung nach Anspruch 2, **dadurch gekennzeichnet, dass** sie einen Speicher umfasst, in welchem unterschiedlichen Werten des Höhenwinkels (α, 5) entsprechende Werte des Höhenwinkelkorrekturparameters (k) und/oder unterschiedlichen Werten des Höhenwinkels (α, 5) entsprechende Korrekturkoeffizienten (KK) und/oder unterschiedlichen Werten des Höhenwinkels (α, 5) entsprechende äquivalente horizontale Entfernungen (E, 17) in Form einer Tabelle hinterlegt sind.

4. Fernoptische Vorrichtung (8), insbesondere Zielfernrohr oder binokulares oder monokulares Fernrohr, mit einer Vorrichtung (21) zur Bestimmung einer anstelle der Zieldistanz (D, 6) zu berücksichtigenden Ersatzdistanz zum Anvisieren eines Ziels (2) mit einer Schusswaffe (9) und einer Anzeige (26) zur Darstellung eines Wertes der Ersatzdistanz beim Anvisieren für einen Schützen (1), **dadurch gekennzeichnet, dass** die Vorrichtung (21) zur Bestimmung der anstelle der Zieldistanz (D, 6) zu berücksichtigenden äquivalenten horizontalen Entfernung (E, 17) als Vorrichtung gemäß einem der Ansprüche 1 bis 3 ausgebildet ist.

5. Fernoptische Vorrichtung nach Anspruch 4, **dadurch gekennzeichnet, dass** die Anzeige (26) in den Sichtkanal, insbesondere in den optischen Strahlengang, der Zieleinrichtung (8) integriert ist.

6. Fernoptische Vorrichtung nach Anspruch 4 oder 5, **dadurch gekennzeichnet, dass** ein Entfernungsmesser (23) zum Messen einer Zieldistanz (D, 6) in den optischen Strahlengang der Zieleinrichtung (8) integriert ist.

**Claims**

1. A device (21) for determining a substitute distance between a location and a substitute impact point of a projectile in a horizontal plane (3) common with the location and for aiming at a target (2), having a rangefinder (23) for measuring a target distance (D, 6) and having an inclinometer (24) for measuring an elevation angle ($\alpha$, 5) between a sight line (4) to the target (2) and the horizontal plane (3), wherein the device (21) comprises a microprocessor (22) configured to calculate as a substitute distance an equivalent horizontal distance (E 17) for an inclined shot with an elevation angle ($\alpha$, 5) by correcting the target distance (D, 6) with a correction coefficient (KK), **characterized in that** the microprocessor (22) is configured to use a correction coefficient (KK) corresponding to at least an approximation solution of a cosine of a substitute elevation angle, wherein the substitute elevation angle corresponds to an elevation angle (a, 5) corrected with an elevation angle correction parameter (k), and/or said microprocessor (22) is configured to use a correction coefficient (KK) corresponding to at least one approximation solution of a cosine of the elevation angle (a, 5) or the substitute elevation angle corrected with a correction value (KW).

2. The device according to claim 1, **characterized in that** the rangefinder (23) comprises a laser rangefinder.

3. The device according to claim 2, **characterized in that** the device comprises a memory where values of the elevation angle correction parameter (k) corresponding to different values of the elevation angle ($\alpha$, 5) and/or correction coefficients (KK) corresponding to different values of the elevation angle ($\alpha$, 5) and/or equivalent horizontal distances (E, 17) corresponding to different values of the elevation angle ($\alpha$, 5) are stored in the form of a table.

4. A long-range optical device (8), in particular a sighting telescope or a binocular or a monocular telescope, having a device (21) for determining a substitute distance to be taken into account in place of the target distance (D, 6) for aiming at the target (2) with a firearm (9) and a display (26) for presenting a value of the substitute distance for aiming to a shooter (1), **characterized in that** the device (21) for determining an equivalent horizontal distance (E, 17) to be taken into account in place of the target distance (D, 6) is designed as a device according to one of claims 1 to 3.

5. The long-range optical device according to claim 4, **characterized in that** the display (26) is integrated into the sight path, in particular into the optical path, of the aiming device (8).

6. The long-range optical device according to claim 4 or 5, **characterized in that** a rangefinder (23) for measuring a target distance (D, 6) is integrated into the optical path of the aiming device (8).

**Revendications**

1. Dispositif (21) destiné à déterminer une distance de remplacement entre un emplacement et un point d'impact de remplacement d'un projectile dans un plan horizontal (3) commun avec l'emplacement, et à viser une cible (2), avec un télémètre (23) destiné à mesurer une distance de la cible (D, 6) et avec un capteur d'inclinaison (24) destiné à mesurer un angle d'élévation ($\alpha$, 5) entre une ligne de visée (4) vers la cible (2) et le plan horizontal (3), le dispositif (21) comprenant un microprocesseur (22) qui est constitué pour calculer, en tant que distance de remplacement, un éloignement (E 17) horizontal équivalent pour un angle de tir avec un angle d'élévation ($\alpha$, 5) par la correction de la distance de la cible (D, 6) avec un coefficient de correction (KK), **caractérisé en ce que** le microprocesseur (22) est agencé pour utiliser en tant que coefficient de correction (KK) une valeur correspondant au moins à une résolution approchée d'un cosinus d'un angle d'élévation de remplacement, l'angle d'élévation de remplacement correspondant à un angle d'élévation ($\alpha$, 5) corrigé avec un paramètre de correction d'angle d'élévation (k), et/ou pour utiliser en tant que coefficient de correction (KK) un montant, corrigé avec une valeur de correction (KW), d'une valeur correspondant au moins une résolution approchée d'un cosinus de l'angle d'élévation (a, 5) ou de l'angle d'élévation de remplacement.

2. Dispositif selon la revendication 1, **caractérisé en ce que** le télémètre (23) comprend un télémètre laser.

3. Dispositif selon la revendication 2, **caractérisé en ce qu'**il comprend une mémoire dans laquelle sont enregistrées sous forme d'un tableau des valeurs du paramètre de correction d'angle d'élévation (k) qui correspondent à différentes valeurs de l'angle d'élévation ($\alpha$, 5) et/ou des coefficients de correction (KK) qui correspondent à différentes valeurs de l'angle d'élévation ($\alpha$, 5) et/ou des éloignements (E, 17) horizontaux équivalents qui correspondent à différentes valeurs de l'angle d'élévation ($\alpha$, 5).

4. Dispositif (8) téléoptique, en particulier lunette de visée ou longue-vue binoculaire ou monoculaire, avec un dispositif (21) destiné à définir une distance de remplacement à prendre en compte à la place de la distance de la cible (D, 6) pour viser une cible (2) avec une arme à feu (9), et avec un affichage (26) destiné à représenter une valeur de la distance de remplacement lors de la visée pour un tireur (1), **caractérisé en ce que** le dispositif (21) est constitué en tant que dispositif selon l'une des revendications 1 à 3 pour définir l'éloignement (E, 17) horizontal équivalent à prendre en compte à la place de la distance de la cible (D, 6).

5. Dispositif téléoptique selon la revendication 4, **caractérisé en ce que** l'affichage (26) est intégré dans le canal de vision, en particulier dans le trajet optique, du dispositif de visée (8).

6. Dispositif téléoptique selon la revendication 4 ou 5, **caractérisé en ce qu'**un télémètre (23) destiné à mesurer une distance de la cible (D, 6) est intégré dans le trajet optique du dispositif de visée (8).

# Fig.1

# Fig.2

# Fig.3

# Fig.4

# Fig.5

| | |
|---|---|
| Entfernungsmesser: Messungs Zieldistanz D | 31 |
| Neigungssensor: Höhenwinkel α | 32 |
| Ermittlung von KP(α) | 33 |
| Berechnung:<br>E = D x KP(α) | 34 |
| Anzeige von E | 35 |

# Fig.6

# Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 511318 B1
- EP 2148165 A2
- US 8172139 B1
- EP 1801614 A2